# EUROPÄISCHE PATENTSCHRIFT

(11) **EP 2 736 665 B1**
(45) Veröffentlichungstag und Bekanntmachung des Hinweises auf die Patenterteilung: **16.09.2015**
(21) Anmeldenummer: 12750338.1
(22) Anmeldetag: 27.07.2012
(51) Int. Cl.: B23B 31/00, B23B 31/10, B23B 31/26, G01M 1/04

(54) **SPANNVORRICHTUNG FÜR EINE AUSWUCHTMASCHINE**
CLAMPING DEVICE FOR A BALANCING MACHINE
DISPOSITIF DE SERRAGE POUR MACHINE D'ÉQUILIBRAGE

(30) Priorität: 29.07.2011 DE 102011052308
(43) Veröffentlichungstag der Anmeldung: 04.06.2014
(73) Patentinhaber: Schenck RoTec GmbH, 64293 Darmstadt (DE)
(72) Erfinder: BUSCHBECK, Andreas, 64404 Bickenbach (DE); THELEN, Dieter, 64397 Modautal (DE)
(74) Vertreter: Haar, Lucas Heinz Jörn
(86) Internationale Anmeldenummer: PCT/EP2012/064760
(87) Internationale Veröffentlichungsnummer: WO 2013/017537

(56) Entgegenhaltungen:
- DE-A1- 3 834 192
- DE-A1- 4 241 583
- DE-A1- 19 961 451
- US-A- 5 322 304

## Beschreibung

Die Erfindung betrifft alternative Spannvorrichtungen gemäß den Oberbegriffen der Ansprüche 1 und 4.

Eine Spannvorrichtung der angegebenen Art ist aus DE 199 61 451 A1 bekannt. Sie dient dazu, rotierende Werkzeuge, wie Bohrer, Fräser oder Schleifwerkzeuge, mit ihrem Werkzeughalter genau zentriert mit der Spindel einer Auswuchtmaschine zu verbinden, um vorhandene Unwuchten mit der erforderlichen Genauigkeit messen zu können. Die bekannte Spannvorrichtung weist als Zentriermittel eine den Kupplungsschaft zentrisch umschließende, im Wesentlichen quer zu dessen äußerer Mantelfläche federnde oder gegen Federkraft auslenkbare Stützflächenanordnung auf, die aus mehreren, in Umfangsrichtung verteilt und im Abstand voneinander angeordneten, radial federnden Zungen besteht, die von einem Basisring abstehen, der an einem mit der Maschinenspindel verbundenen Grundkörper gehalten ist. In einem axialen Abstand zu der federnden Stützflächenanordnung ist eine weitere starre Stützflächenanordnung vorgesehen, die von Ringflächen an dem Grundkörper und dem Kupplungsschaft gebildet ist.

Bei einer federnden Stützflächenanordnung besteht das Problem, dass die Position der Stützflächen nicht genau festliegt und beispielsweise von der Reibung zwischen den Stützflächen und ihren Gegenflächen beeinflusst werden kann. Hierdurch kann sich bei jedem erneuten Spannen eines Werkzeugschafts eine etwas andere Zentrierlage ergeben, wodurch die Wiederholgenauigkeit der Einspannung beeinträchtigt sein kann.

Der Erfindung liegt die Aufgabe zugrunde, eine Spannvorrichtung der eingangs genannten Art zu schaffen, die das Zentrieren und Einspannen von Werkzeughaltern in einer Aufnahmeöffnung der Spindel mit wiederholter Genauigkeit und moderaten Spannkräften ermöglicht.

Die Aufgabe wird durch eine Spannvorrichtung mit den in den Ansprüchen 1 und 4 angegebenen Merkmalen gelöst. Vorteilhafte Ausgestaltungen der Spannvorrichtung sind in den Ansprüchen 2, 3 und 5 bis 14 angegeben.

Nach der Erfindung weist bei einer Spannvorrichtung zum koaxialen Einspannen eines Werkzeughalters an einer um eine Drehachse drehbaren Spindel einer Auswuchtmaschine die Spindel an einem Stirnende eine koaxiale Aufnahmeöffnung und der Werkzeughalter einen in das Stirnende der Spindel axial einsetzbaren Kupplungsschaft auf, der mittels lösbarer Spannmittel in der Aufnahmeöffnung axial festspannbar ist, wobei in der Aufnahmeöffnung angeordnete Innenzentrierflächen mit Außenzentrierflächen an dem Kupplungsschaft zusammenwirken, um den Kupplungsschaft in zentrierter Lage radial und gegebenenfalls axial an der Spindel abzustützen. Die Abstützung des Kupplungsschafts in der Aufnahmeöffnung erfolgt nach der Erfindung in wenigstens einer die Drehachse schneidenden ersten Eingriffsebene nur an diskreten Abstützstellen, die in Umfangsrichtung Abstände voneinander haben, wobei eine erste und eine zweite der diskreten Abstützstellen von den Innen- und Außenzentrierflächen gebildet sind und gemeinsam eine starre Abstützung in einer ersten radialen Richtung bilden und wobei eine dritte der diskreten Abstützstellen von einem radial verstellbaren ersten Abstützelement gebildet ist und eine Abstützung in einer der ersten radialen Richtung entgegengesetzten zweiten radialen Richtung bildet.

Die Spannvorrichtung nach der Erfindung verbindet in vorteilhafter Weise die Eigenschaften einer starren Abstützung des Kupplungsschafts mit denjenigen einer radial nachgiebigen. Die starren ersten und zweiten diskreten Abstützstellen gewährleisten eine wiederholgenaue Positionierung des Kupplungsschafts in der Aufnahmeöffnung der Spindel. Ihre Innen- und Außenzentrierflächen werden durch das radial verstellbare Abstützelement in Eingriff gehalten, wobei dieses in der Lage ist, fertigungsbedingte Durchmesserdifferenzen zwischen dem Innendurchmesser der Aufnahmeöffnung und dem Außendurchmesser des Kupplungsschafts in der Eingriffsebene auszugleichen. Die Beschränkung der Zentrierung auf diskrete Abstützstellen hat weiterhin den Vorteil, dass Reibungseinflüsse auf die Zentrierlage verringert werden und kleinere Spannkräfte ausreichen, um eine definierte und genau reproduzierbare Zentrierlage zu erreichen. Eine Überbestimmtheit der die Zentrierlage bestimmenden Abstützung des Kupplungsschafts und dadurch bedingte Lagedifferenzen bei wiederholter Einspannung werden vermieden.

Im Gegensatz zu der eingangs genannten bekannten Spannvorrichtung erfolgt nach der Erfindung der Ausgleich von Durchmesserdifferenzen nur in einer durch die Lage der beiden starren diskreten Abstützstellen bestimmten radialen Richtung. Dies hat zur Folge, dass Fehler in Bezug auf die genaue Zentrierung des Kupplungszapfens in der Aufnahmeöffnung auftreten können. Derartige Zentrierfehler können aber beim Auswuchten durch Umschlagkompensation ausgeglichen werden und beeinträchtigen daher die Unwuchtmessung nicht.

Die Abstützung des Kupplungsschafts kann in einer zweiten Eingriffsebene auf analoge Weise nur an diskreten Abstützstellen erfolgen. Hierzu können Innenzentrierflächen der Aufnahmeöffnung und Außenzentrierflächen des Kupplungsschafts eine vierte und eine fünfte starre diskrete Abstützstelle bilden, wobei die Abstützstellen in Umfangsrichtung einen Abstand voneinander haben und gemeinsam eine Abstützung in einer radialen Richtung bilden. Den vierten und fünften Abstützstellen kann in der zweiten Eingriffsebene eine sechste Abstützstelle zugeordnet sein, die von einem radial verstellbaren Abstützelement gebildet ist, das eine Abstützung in einer der Richtung der starren Abstützung entgegengesetzten radialen Richtung bildet. Durch die Abstützstellen in den beiden Eingriffsebenen wird eine exakte definierte Ausrichtung des Werkzeughalters gegenüber der Spindel erreicht, wobei die Präzision bei der Herstellung der Innen- und Außenzentrierflächen der starren Abstützstellen die Genauigkeit der angestrebten koaxialen Lage von Werkzeughalter und Spindel bestimmt und nach einer Trennung von Spindel und Werkzeughalter eine wiederholgenaue Einnahme dieser Lage gewährleistet.

Nach einem weiteren Vorschlag der Erfindung kann eine wiederholgenaue koaxiale Ausrichtung des Kupplungsschafts in der Aufnahmeöffnung der Spindel auch mit nur fünf diskreten Abstützstellen erfolgen, indem diese in drei voneinander entfernten, die Drehachse schneidenden Eingriffsebenen liegen, wobei in einer ersten Eingriffsebene eine erste und eine zweite der diskreten Abstützstellen von Innen- und Außenzentrierflächen gebildet sind und gemeinsam eine starre Abstützung in einer ersten radialen Richtung bilden, wobei in einer zweiten Eingriffsebene vierte und fünfte diskrete Abstützstellen von Innen- und Außenzentrierflächen gebildet sind und gemeinsam eine zweite starre Abstützung in der ersten radialen Richtung bilden, und wobei in einer zwischen der ersten und der zweiten Eingriffsebene liegenden dritten Eingriffsebene ein Abstützelement angeordnet ist, das eine dritte diskrete Abstützstelle bildet und eine Abstützung in einer der ersten radialen Richtung entgegengesetzten zweiten radialen Richtung bewirkt.

Die Gestaltung mit fünf Abstützstellen ist statisch bestimmt. Das die dritte diskrete Abstützstelle bildende Abstützelement kann daher radial verstellbar aber auch starr sein. Ersteres ist zweckmäßig, wenn der Kupplungsschaft eine zylindrische Mantelfläche hat oder die Außenzentrierflächen des Kupplungsschafts Abschnitte einer gemeinsamen zylindrischen Mantelfläche sind, da das verstellbare Abstützelement dann genutzt werden kann, um Durchmesserdifferenzen auszugleichen und eine definierte radiale Spannkraft zu erzeugen. Weist der Kupplungsschaft eine konische Mantelfläche auf oder sind die Außenzentrierflächen des Kupplungsschafts Abschnitte einer gemeinsamen kegelstumpfförmigen Mantelfläche, so kann das die dritte diskrete Abstützstelle bildende Abstützelement starr sein, da sich der Kupplungsschaft durch axiale Verlagerung an alle starren Abstützstellen in der Aufnahmeöffnung abgestützt. Abweichungen im Durchmesser oder in der Kegelform werden durch die Anpassung der axialen Lage des Kupplungsschafts in der Aufnahmeöffnung ebenfalls kompensiert.

Sind die Innen- und Außenzentrierflächen zylindrisch und ist das Abstützelement radial verstellbar, so ist eine axiale Abstützung des Werkzeughalters an der Spindel erforderlich. Hierzu kann der Werkzeughalter eine radiale Anlagefläche aufweisen, die an eine Stirnfläche an der Spindel anlegbar ist. Ist der Werkzeughalter nur in einer Eingriffsebene an diskreten Abstützstellen radial abgestützt, so muss nach der Erfindung die axiale Abstützung des Werkzeughalters so gestaltet sein, dass sie eine zur Drehachse der Spindel parallele Ausrichtung der Drehachse des Werkzeughalters bewirkt. Dies kann durch wenigstens drei, die Ecken eines Dreiecks bildende axiale Abstützstellen zwischen Werkzeughalter und Spindel erreicht werden. Vorzugsweise liegen die axialen Abstützstellen in einer zur Drehachse senkrechten Ebene.

Nach einem weiteren Vorschlag der Erfindung kann das radial verstellbare dritte oder sechste Abstützelement an der Spindel oder dem Werkzeughalter radial beweglich gelagert und gegen die Kraft einer Feder radial verstellbar sein. Alternativ kann das Abstützelement an der Spindel oder dem Werkzeughalter mittels mechanischer Stellelemente verstellbar sein. Die Verstellbarkeit entgegen der Kraft einer Feder hat den Vorteil, dass das Abstützelement automatisch die richtige Position einnimmt, wobei die Feder die an der Abstützstelle erforderliche radiale Spannkraft erzeugt.

Die diskreten Abstützstellen können auf verschiedene Weise hergestellt werden und sind vorzugsweise in der Aufnahmeöffnung angeordnet. Sie können auch durch eine Kombination von Innen- und Außenzentrierflächen gebildet sein, die einander überkreuzen. So können beispielsweise die Innenzentrierflächen in der Aufnahmeöffnung von separaten, achsparallelen Rippen gebildet sein, die mit ringförmigen Außenzentrierflächen des Kupplungszapfens zusammenwirken, so dass an den Flächenkreuzungen diskrete Abstützstellen entstehen. Die Innenzentrierflächen der Abstützstellen können sich an die Außenzentrierflächen des Kupplungsschafts anschmiegen, können aber auch eine andere Form haben, beispielsweise eine geringere Krümmung haben oder eben oder konvex gekrümmt sein.

Die Erfindung wird nachfolgend anhand von Ausführungsbeispielen näher erläutert, die in der Zeichnung dargestellt sind. Es zeigen
- Figur 1: einen Querschnitt durch die Spindel einer Auswuchtmaschine mit darin aufgenommenem Werkzeughalter,
- Figur 2: eine schematische Darstellung der diskreten Abstützung eines Werkzeughalters in einer Spindel gemäß Figur 1,
- Figur 3: eine schematische Darstellung der diskreten Abstützung eines zylindrischen Werkzeughalters,
- Figur 4: einen Querschnitt IV-IV einer anderen Ausführungsform einer Spindel einer Auswuchtmaschine mit darin aufgenommenem Werkzeughalter und
- Figur 5: eine Ansicht von oben, teilweise geschnitten, der Ausführungsform gemäß Figur 4.

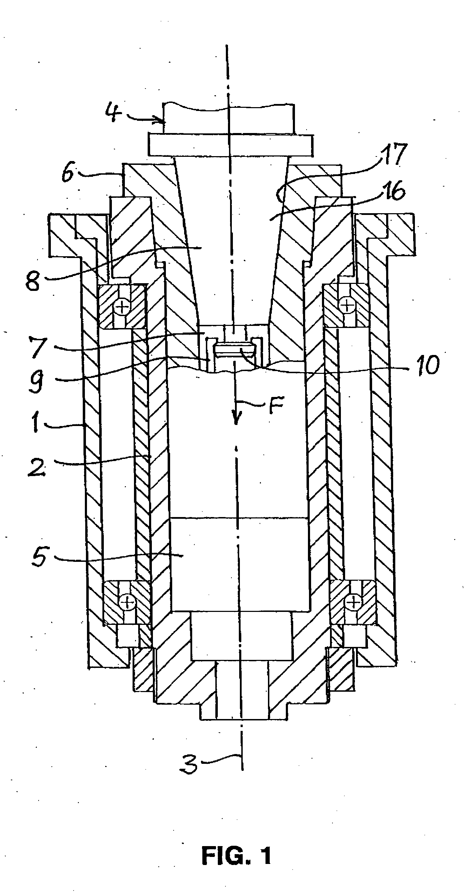

Figur 1 zeigt ein Gehäuse 1, das für den Einbau in eine Auswuchtmaschine bestimmt ist. In dem Gehäuse 1 ist eine Spindel 2 um eine Drehachse 3 drehbar gelagert. Die Spindel ist zur dynamischen Messung der Unwucht eines Werkzeughalters 4 für hochtourig angetriebene Werkzeuge, beispielsweise Bohrer, Fräser oder Schleifkörper, bestimmt und kann in der Auswuchtmaschine mit Hilfe eines in der Zeichnung nicht dargestellten Drehantriebs angetrieben werden. Die Spindel 2 weist eine zentrale Bohrung 5 auf, in der ein auswechselbarer Adapter 6 angeordnet ist, der fest mit der Spindel 2 verschraubt ist. Der Adapter 6 dient zur Anpassung der Spindelaufnahme an eine bestimmte Form und Größe der Kupplungsmittel des zu messenden Werkzeughalters 4. Bei dem in der Zeichnung dargestellten Ausführungsbeispiel hat der Adapter 6 eine Aufnahmeöffnung 7, die zur Aufnahme eines an dem Werkzeughalter 4 angeordneten Kupplungsschafts 8 ausgebildet ist, der die Form eines üblichen Steilkegelschafts mit einer kegelstumpfförmigen Außenzentrierfläche 16 hat. In dem Adapter 6 ist weiterhin eine pneumatisch oder hydraulisch betätigbare Spannvorrichtung 9 angeordnet, die dazu ausgebildet ist, den am freien Ende des Kupplungsschafts 8 angeordneten Spannkopf 10 zu ergreifen und den Kupplungsschaft 8 mit einer Kraft F in axialer Richtung in die Aufnahmeöffnung 7 hineinzuziehen und in dieser festzuhalten. Der Adapter 6 ist mit genauer Passung spielfrei in die Bohrung 5 der Spindel 2 eingesetzt und seine Aufnahmeöffnung 7 weist eine zur Drehachse 3 koaxiale hohlkegelförmige Innenfläche 17 auf, deren Kegelwinkel mit dem Kegelwinkel des Kupplungsschafts 8 übereinstimmt.

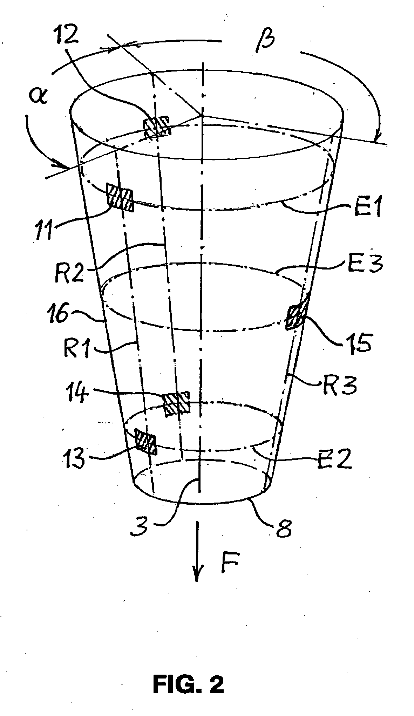

Bei der Aufnahme eines Werkzeughalters mit Kupplungsschaft in der Antriebsspindel einer Werkzeugmaschine wird der Kupplungsschaft mit sehr großer Axialkraft in die hohlkegelförmige Aufnahmeöffnung der Werkzeugmaschine hineingezogen, damit sich die feste Einspannung des Werkzeughalters bei der Bearbeitung von Werkstücken nicht lockern und gegenüber der Antriebsspindel verlagern kann. Durch die große Axialkraft werden der Werkzeughalter und der ihn aufnehmende Bereich der Antriebsspindel geringfügig elastisch verformt, wobei der positionsgenauen Einspannung widrige Einflüsse, wie Reibung und Formabweichungen im Bereich der Zentrierflächen, überwunden werden können. Für die Unwuchtmessung ist das Einspannen des Werkzeughalters mit einer so hohen Axialkraft jedoch nicht erforderlich und aus Kostengründen daher auch nicht vorgesehen. Die Gefahr, dass es zu Einspannfehlern und einer fehlerhaften Zentrierlage des Werkzeughalters gegenüber der Spindel der Auswuchtmaschine kommen kann, ist daher größer. Um diese Gefahr zu verringern, sind nach der Erfindung, wie in Figur 2 veranschaulicht, in der Aufnahmeöffnung 7 diskrete Abstützstellen 11 bis 15 ausgebildet, an denen der Kupplungsschaft 8 mit seiner kegelstumpfförmigen Außenzentrierfläche 16 ausschließlich abgestützt ist. Die diskreten Abstützstellen 11 bis 15 bestehen aus gegenüber der hohlkegelförmigen Innenfläche 17 der Aufnahmeöffnung 7 erhabenen Vorsprüngen, deren Oberflächen Innenzentrierflächen bilden und jeweils Abschnitte einer gemeinsamen Hohlkegelfläche sein können. Die Vorsprünge sind starr und fest mit dem Adapter 6 verbunden. Sie können integraler Bestandteil des Adapters 6 sein oder aus Einsätzen oder Auflagen bestehen, die in der Aufnahmeöffnung 7 befestigt sind.

Die Mitten der Abstützstellen 11 bis 15 sind in parallelen Eingriffsebenen E1, E2, E3 angeordnet, welche die Drehachse 3 rechtwinklig schneiden. Abweichend hiervon können die Eingriffsebenen E1 bis E3 die Drehachse 3 auch in einem anderen Winkel schneiden. In der oberen ersten Eingriffsebene E1 liegen die Abstützstellen 11, 12, in der zweiten unteren Eingriffsebene E2 liegen die Abstützstellen 13, 14 und in der mittleren dritten Eingriffsebene E3 liegt die Abstützstelle 15. Die Mitten der Abstützstellen 11, 13 liegen außerdem in einer ersten, zur Drehachse 3 radialen Ebene R1 und die Mitten der Abstützstellen 12, 14 in einer zweiten radialen Ebene R2, wobei die beiden radialen Ebenen einen Winkel α miteinander bilden, der vorzugsweise 120° beträgt, aber auch kleiner oder größer als 120° sein kann. Die Mitte der Abstützstelle 15 liegt in einer dritten radialen Ebene R3, die den Winkel α vorzugsweise halbiert, aber auch eine davon abweichende Lage haben kann. Der Winkel β, den die dritte radiale Ebene R3 mit der ersten R1 oder zweiten radialen Ebene R2 bildet, sollte aber in jedem Fall wesentlicher kleiner als 180° sein.

Durch die beschriebene Anordnung der diskreten Abstützstellen 11 bis 15 ergibt sich eine statisch bestimmte Abstützung der Außenzentrierfläche 16 des Kupplungsschafts 8. Die Zentrierlage des Kupplungszapfens wird somit ausschließlich durch die fünf diskreten Abstützstellen 11 bis 15 bestimmt, wobei eine verhältnismäßig kleine Axialkraft F ausreichend ist, um den Kupplungsschaft 8 an die Innenzentrierflächen der Abstützstellen 11 bis 15 definiert anzudrücken.

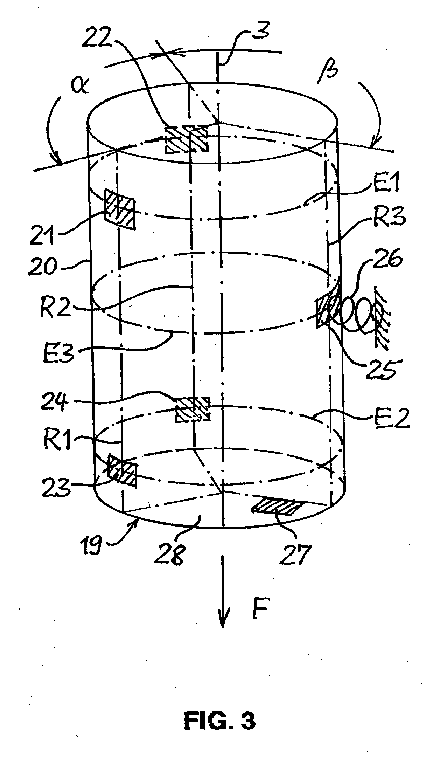

Figur 3 veranschaulicht die Abstützung eines Kupplungsschafts 19 von mit dem Kupplungsschaft 8 vergleichbarer Länge, wobei der Kupplungsschaft 19 eine zylindrische Außenzentrierfläche 20 hat. Auch hierbei sind in analoger Anordnung wie bei dem Ausführungsbeispiel gemäß Figur 2 in der Aufnahmeöffnung von Innenzentrierflächen gebildete fünf Abstützstellen 21 bis 25 in drei parallelen Eingriffsebenen E1, E2, E3 und radialen Ebenen R1, R2, R3 angeordnet. Der radiale Abstand der Abstützstellen 21 bis 24 von der Drehachse 3 ist gleich. Da die zylindrische Außenzentrierfläche 20 durch eine axial wirkende Kraft F nicht radial gespannt werden kann, wird die Abstützstelle 25 von einem radial verstellbaren Abstützelement gebildet, das durch die Kraft einer Feder 26 radial nach Innen gedrückt werden kann. Als Alternative kann auch ein durch mechanische Mittel, beispielsweise eine Stellschraube, radial verstellbares Andrückelement die Abstützstelle 25 bilden. Durch das radial verstellbare Abstützelement wird der Kupplungsschaft 19 mit seiner Außenzylinderfläche 20 in radialer Richtung an die in der Aufnahmeöffnung angeordneten starren Abstützstellen 21 bis 24 gedrückt und dadurch wiederholgenau in einer zur Drehachse 3 koaxialen Lage radial gespannt. Die koaxiale Lage des Kupplungsschafts wird daher ausschließlich durch die starren Abstützstellen 21 bis 24 bestimmt und kann somit bei jedem Wechsel des Kupplungsschafts wiederholgenau eingenommen werden. Die radiale Spannkraft kann hierbei durch die Bemessung der Feder 26 eine für den jeweiligen Anwendungsfall vorteilhafte Größe erhalten. In axialer Richtung können die Abstützstellen 21 bis 25 den Kupplungsschaft 19 an der Außenzentrierfläche 20 nicht abstützen. Zur Festlegung der Axialposition und Abstützung gegen die axiale Kraft F der Spannvorrichtung ist daher eine axial wirkende Abstützstelle 27 erforderlich, die mit einer sich radial erstreckenden Anlagefläche 28 des Kupplungsschafts 19 zusammenwirkt.

Anstelle einer einzigen verstellbaren Abstützstelle 25 können bei dem Ausführungsbeispiel gemäß Figur 3 auch zwei von einem radial verstellbaren Abstützelement gebildete Abstützstellen, z.B. eine in der Eingriffsebene E1 und eine in der Eingriffsebene E2, angeordnet sein. Auf diese Weise kann eine bessere Verteilung der radialen Spannkraft auf die einzelnen diskreten Abstützstellen erreicht werden.

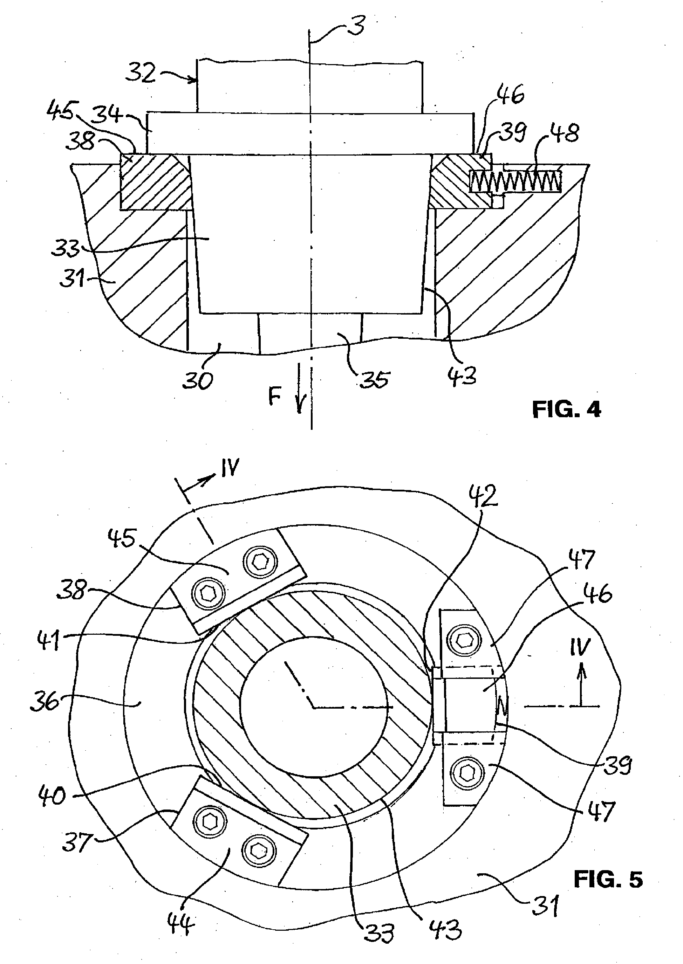

Bei dem in den Figuren 4 und 5 gezeigten Ausführungsbeispiel ist in der Aufnahmeöffnung 30 einer Spindel 31 ein Werkzeughalter 32 eingespannt, der einen als Hohlschaftkegel ausgebildeten Kupplungsschaft 33 von kleinerer axialer Länge aufweist. Der Werkzeughalter 32 weist angrenzend an den Kupplungsschaft 33 einen Ringflansch 34 auf, der zur axialen Abstützung und achsparallelen Ausrichtung des Werkzeughalters 32 zur Drehachse 3 der Spindel 31 dient. Der Werkzeughalter 32 wird in üblicher Weise mittels einer an der Spindel 31 angeordneten Spannvorrichtung 35 gespannt, die in eine hinterschnittene Bohrung im Kupplungsschaft 33 eingreift und den Werkzeughalter 32 mit dem Ringflansch 34 in axialer Richtung gegen eine stirnseitige Anlagefläche an der Spindel 31 zieht.

Zur Zentrierung und axialen Abstützung des Werkzeughalters 32 sind an der Spindel 31 in einer ringförmigen Erweiterung 36 des stirnseitigen Endes der Aufnahmeöffnung 30 zwei feste Abstützelemente 37, 38 und ein radial verstellbares Abstützelement 39 angeordnet. Die Mitten der Abstützelemente 37 bis 39 haben in Umfangsrichtung jeweils den gleichen Abstand voneinander. Die Abstützelemente 37 bis 39 haben erste, tangential ausgerichtete, ebene Innenzentrierflächen 40, 41, 42, die mit der konischen Außenzentrierfläche 43 des Kupplungsschafts 33 zusammen wirken und die gleiche Neigung wie diese in Bezug auf die Drehachse 3 haben. Die Abstützelemente 37 bis 39 ragen radial nach innen in die Aufnahmeöffnung 30 hinein, so dass der Innendurchmesser im Bereich der Innenzentrierflächen 40 bis 42 kleiner ist als der Innendurchmesser der Aufnahmeöffnung 30. Mit ihren Oberseiten bilden die Abstützelemente 37 bis 39 radiale Anlageflächen 44, 45, 46, die in einer gemeinsamen, zur Drehachse 3 normalen Ebene liegen und zur axialen Abstützung des Ringflansches 34 dienen. Das Abstützelement 39 ist in einer Führung 47 radial beweglich geführt und an einer Druckfeder 48 abgestützt, die bestrebt ist, das Abstützelement 39 radial nach innen zu drücken.

Durch die beschriebene Gestaltung bilden die Abstützelemente 37 bis 39 mit ihren tangentialen Innenzentrierflächen 40 bis 42 im Zusammenwirken mit der Außenzentrierfläche 43 des Kupplungsschafts 33 drei diskrete Abstützstellen, von denen zwei starr sind und eine gegen Federkraft radial verstellbar ist. Weiterhin bilden die Abstützelemente 37 bis 39 mit ihren Anlageflächen 44, 45, 46 drei in axialer Richtung starre diskrete Abstützstellen für den Ringflansch 34. Durch diese diskreten Abstützstellen wird eine wiederholgenaue Zentrierung und koaxiale Ausrichtung des Werkzeughalters 32 bei verhältnismäßig kleiner axialer Spannkraft der Spannvorrichtung 35 erreicht. Die Druckfeder 48 sorgt immer für eine feste Anlage des Kupplungsschafts 33 an den Innenzentrierflächen 40, 41, so dass die durch letztere definierte Radialposition des Kupplungsschafts 33 sich bei jeder wiederholten Einspannung einstellt. Kleine Zentrierfehler, die sich aus geringen Durchmesserunterschieden zwischen Kupplungsschäften verschiedener Werkzeughalter ergeben können, können bei der Unwuchtmessung durch Umschlagkompensation ausgeglichen werden.

## Patentansprüche

1. Spannvorrichtung zum koaxialen Einspannen eines Werkzeughalters (32) an einer um eine Drehachse (3) drehbaren Spindel (31) einer Auswuchtmaschine, wobei die Spindel (31) an einem Stirnende eine koaxiale Aufnahmeöffnung (30) und der Werkzeughalter (32) einen in das Stirnende der Spindel (31) axial einsetzbaren Kupplungsschaft (33) aufweisen, der mittels lösbarer Spannmittel in der Aufnahmeöffnung (30) axial festspannbar ist und wobei wenigstens eine Innenzentrierfläche (40-42) in der Aufnahmeöffnung (30), wenigstens eine Außenzentrierfläche (43) an dem Kupplungsschaft (33) und gegebenenfalls eine weitere Anlagefläche (44-46) zusammenwirken, um den Werkzeughalter (32) in koaxialer Lage radial und axial an der Spindel (31) abzustützen, **dadurch gekennzeichnet, dass** die Abstützung des Kupplungsschafts (33) in der Aufnahmeöffnung (30) nur an diskreten Abstützstellen erfolgt, die in Umfangsrichtung Abstände voneinander haben, wobei eine erste und eine zweite der diskreten Abstützstellen von Innen- und Außenzentrierflächen (40, 41, 43) gebildet sind und gemeinsam eine starre Abstützung in einer ersten radialen Richtung bilden und wobei eine dritte der diskreten Abstützstellen von einem radial verstellbaren ersten Abstützelement (39) gebildet ist und eine Abstützung in einer der ersten radialen Richtung entgegengesetzten zweiten radialen Richtung bildet.

2. Spannvorrichtung nach Anspruch 1, **dadurch gekennzeichnet, dass** die diskreten Abstützstellen in wenigstens einer die Drehachse (3) schneidenden Eingriffsebene liegen.

3. Spannvorrichtung nach Anspruch 1, **dadurch gekennzeichnet, dass** die Abstützung des Kupplungsschafts in der Aufnahmeöffnung in einer die Drehachse schneidenden ersten Eingriffsebene und einer die Drehachse schneidenden zweiten Eingriffsebene nur an diskreten Abstützstellen erfolgt, wobei Innen- und Außenzentrierflächen vier starre diskrete Abstützstellen bilden, welche paarweise in der ersten und zweiten der Eingriffsebenen angeordnet sind und gemeinsam eine starre Abstützung in einer radialen Richtung bilden und dass in der ersten und der zweiten Eingriffsebene jeweils eine dritte diskrete Abstützstelle von einem radial verstellbaren Abstützelement gebildet ist, das eine Abstützung in einer der Richtung der starren Abstützung entgegengesetzten radialen Richtung bildet.

4. Spannvorrichtung zum koaxialen Einspannen eines Werkzeughalters (4) an einer um eine Drehachse (3) drehbaren Spindel (2) einer Auswuchtmaschine, wobei die Spindel (2) an einem Stirnende eine koaxiale Aufnahmeöffnung (7) und der Werkzeughalter (4) einen in das Stirnende der Spindel (2) axial einsetzbaren Kupplungsschaft (8; 19) aufweisen, der mittels lösbarer Spannmittel (9, 10) in der Aufnahmeöffnung (7) axial festspannbar ist und wobei wenigstens eine Innenzentrierfläche (17) in der Aufnahmeöffnung (7) und wenigstens eine Außenzentrierfläche (16; 20) an dem Kupplungsschaft (8; 19) zusammenwirken, um den Kupplungsschaft (8; 19) in zentrierter Lage radial und gegebenenfalls axial an der Spindel (2) abzustützen, **dadurch gekennzeichnet, dass** die Abstützung des Kupplungsschafts (8; 19) in der Aufnahmeöffnung (7) nur an diskreten Abstützstellen (11-15; 21-25) erfolgt, die in Umfangsrichtung Abstände voneinander haben, in drei voneinander entfernten, die Drehachse (3) schneidenden Eingriffsebenen (E1, E2, E3) liegen und von Innen- und Außenzentrierflächen gebildet sind, wobei in einer ersten Eingriffsebene (E1) eine erste (11; 21) und eine zweite (12; 22) der diskreten Abstützstellen (11-15; 21-25) gebildet sind und gemeinsam eine starre Abstützung in einer ersten radialen Richtung bilden, wobei in einer zweiten Eingiffsebene (E2) eine dritte (13; 23) und eine vierte (14; 24) der diskreten Abstützstellen (11-15; 21-25) gebildet sind und gemeinsam eine zweite starre Abstützung in der ersten radialen Richtung bilden und wobei in der zwischen der ersten und der zweiten Eingriffsebene liegenden dritten Eingriffsebene (E3) eine fünfte diskrete Abstützstelle (15; 25) gebildet ist, die eine Abstützung in einer der ersten radialen Richtung entgegengesetzten zweiten radialen Richtung bewirkt.

5. Spannvorrichtung nach Anspruch 4, **dadurch gekennzeichnet, dass** die fünfte diskrete Abstützstelle (25) von einem radial verstellbaren Abstützelement gebildet ist.

6. Spannvorrichtung nach einem der Ansprüche 1 bis 3 oder 5, **dadurch gekennzeichnet, dass** das radial verstellbare Abstützelement (39) radial beweglich an der Spindel (32) oder dem Werkzeughalter gelagert und gegen die Kraft einer Feder (26; 48) verstellbar ist.

7. Spannvorrichtung nach einem der Ansprüche 1 bis 6, **dadurch gekennzeichnet, dass** die Außenzentrierfläche (20) des Kupplungsschafts (19) von einer Zylindermantelfläche oder mehreren Zylindermantelflächen gebildet ist.

8. Spannvorrichtung nach einem der Ansprüche 1 bis 6, **dadurch gekennzeichnet, dass** der Kupplungsschaft (8) eine konische Außenzentrierfläche (16) aufweist.

9. Spannvorrichtung nach einem der Ansprüche 1 bis 6, **dadurch gekennzeichnet, dass** die Außenzentrierfläche des Kupplungsschafts Abschnitte einer gemeinsamen kegelstumpfförmigen Mantelfläche sind.

10. Spannvorrichtung nach einem der Ansprüche 8 oder 9 in Verbindung mit Anspruch 4, **dadurch gekennzeichnet, dass** die fünfte diskrete Abstützstelle (15) starr ist.

11. Spannvorrichtung nach einem der Ansprüche 1 bis 9, **dadurch gekennzeichnet, dass** die Spindel (31) eine Anlagefläche (28) oder mehrere diskrete Anlageflächen (44-46) zur axialen Abstützung des Werkzeughalters (32) aufweist.

12. Spannvorrichtung nach einem der Ansprüche 1 bis 11, **dadurch gekennzeichnet, dass** die diskreten Abstützstellen (11, 12 bzw. 13, 14; 21, 22 bzw. 23, 24), die in der gleichen Eingriffsebene (E1 bzw. E2) liegen, den gleichen radialen Abstand von der Drehachse (3) haben.

13. Spannvorrichtung nach Anspruch 12, **dadurch gekennzeichnet, dass** die diskreten Abstützstellen (11, 13 bzw. 12, 14) verschiedener Eingriffsebenen (E1, E2) einen verschieden großen radialen Abstand von der Drehachse (3) haben.

14. Spannvorrichtung nach einem der Ansprüche 1 bis 13, **dadurch gekennzeichnet, dass** die Innenzentrierflächen der diskreten Abstützstellen (11 bis 15; 21 bis 25) konkav oder konvex gekrümmt oder eben sind.

## Claims

1. A clamping device for coaxially clamping a toolholder (32) on a spindle (31) of a balancing machine, said spindle (31) being rotary about an axis of rotation (3) and including at a frontal end a coaxial receiving socket (30), and said toolholder (32) including a coupling shank (33) axially insertable into the frontal end of the spindle (31), said coupling shank being adapted to be axially clamped in place in the receiving socket (30) by means of releasable clamping means, and wherein at least one inner locating surface (40-42) in the receiving socket (30), at least one outer locating surface (43) on the coupling shank (33) and, where applicable, one further engaging surface (44-46) cooperate in order to support the toolholder (32) in coaxial position radially and axially on the spindle (31), **characterized in that** the supporting of the coupling shank (33) in the receiving socket (30) takes place only on discrete supports spaced from each other circumferentially, wherein a first and a second one of the discrete supports are formed by inner and outer locating surfaces (40, 41, 43) and define, in combination, a rigid support in a first radial direction, and wherein a third one of the discrete supports is formed by a radially adjustable first supporting element (39) and defines a support in a second radial direction opposite the first radial direction.

2. The clamping device according to claim 1, **characterized in that** the discrete supports lie in at least one engagement plane intersecting the axis of rotation (3).

3. The clamping device according to claim 1, **characterized in that** the supporting of the coupling shank in the receiving socket takes place only on discrete supports in a first engagement plane intersecting the axis of rotation and a second engagement plane intersecting the axis of rotation, with inner and outer locating surfaces forming four rigid discrete supports arranged in pairs in the first and second one of the engagement planes and combining to form a rigid support in a radial direction, and that in the first and the second engagement plane a third discrete support is formed by a radially adjustable supporting element providing a supporting function in a radial direction opposite the direction of the rigid support.

4. A clamping device for coaxially clamping a toolholder (4) on a spindle (2) of a balancing machine, said spindle (2) being rotary about an axis of rotation (3) and including at a frontal end a coaxial receiving socket (7), and said toolholder (4) including a coupling shank (8; 19) axially insertable into the frontal end of the spindle (2), said coupling shank being adapted to be axially clamped in place in the receiving socket (7) by means of releasable clamping means (9, 10), and wherein at least one inner locating surface (17) in the receiving socket (7) and at least one outer locating surface (16; 20) on the coupling shank (8; 19) cooperate in order to support the coupling shank (8; 19) on the spindle (2) in a centered position radially and, where applicable, axially, **characterized in that** the supporting of the coupling shank (8; 19) in the receiving socket (7) takes place only on discrete supports (11-15; 21-25) which are spaced from each other circumferentially, lie in three relatively spaced engagement planes (E1, E2, E3) intersecting the axis of rotation (3) and are formed by inner and outer locating surfaces, wherein a first (11; 21) and a second (12; 22) one of the discrete supports (11-15; 21-25) are formed in a first engagement plane (E1) and define in combination a rigid support In a first radial direction, wherein a third (13; 23) and a fourth (14; 24) one of the discrete supports (11-15; 21-25) are formed in a second engagement plane (E2) and define in combination a second rigid support in the first radial direction, and wherein in the third engagement plane (E3) lying between the first and the second engagement plane a fifth discrete support (15; 25) is formed which effects a supporting function in a second radial direction opposite the first radial direction.

5. The clamping device according to claim 4, **characterized in that** the fifth discrete support (25) is formed by a radially adjustable supporting element.

6. The clamping device according to any one of the claims 1 to 3 or claim 5, **characterized in that** the radially adjustable supporting element (39) is carried for radial movement on the spindle (32) or the toolholder and is adjustable against the force of a spring (26; 48).

7. The clamping device according to any one of the claims 1 to 6, **characterized in that** the outer locating surface (20) of the coupling shank (19) is formed by a cylindrical envelope surface or a plurality of cylindrical envelope surfaces.

8. The clamping device according to any one of the claims 1 to 6, **characterized in that** the coupling shank (8) has a conical outer locating surface (16).

9. The clamping device according to any one of the claims 1 to 6, **characterized in that** the outer locating surface of the coupling shank is formed by sections of a common frusto-conical envelope surface.

10. The clamping device according to any one of the claims 8 or 9 or in combination with claim 4, **characterized in that** the fifth discrete support (15) is rigid.

11. The clamping device according to any one of the claims 1 to 9, **characterized in that** the spindle (31) includes an engaging surface (28) or a plurality of discrete engaging surfaces (44-46) for axially supporting the toolholder (32).

12. The clamping device according to any one of the claims 1 to 11, **characterized in that** the discrete supports (11, 12 and, respectively, 13, 14; 21, 22 and, respectively, 23, 24) which lie in the same engagement plane (E1 and, respectively, E2) are at the same radial distance from the axis of rotation (3).

13. The clamping device according to claim 12, **characterized in that** the discrete supports (11, 13 and, respectively, 12, 14) of different engagement planes (E1, E2) are spaced at different radial distances from the axis of rotation (3).

14. The clamping device according to any one of the claims 1 to 13, **characterized in that** the inner locating surfaces of the discrete supports (11 to 15; 21 to 25) are curved in a concave or convex shape or are plane.

## Revendications

1. Dispositif de serrage pour serrer de façon coaxiale un porte-outil (32) sur une broche (31) d'une machine d'équilibrage, laquelle broche peut pivoter autour d'un axe de rotation (3), la broche (31) présentant à une extrémité frontale une ouverture de réception coaxiale (30) et le porte-outil (32) présentant une tige d'accouplement (33) pouvant être insérée axialement dans l'extrémité frontale de la broche (31) et pouvant être serrée axialement à l'aide de moyens de serrage réversibles dans l'ouverture de réception (30), au moins une surface de centrage interne (40 - 42) dans l'ouverture de réception (30), au moins une surface de centrage externe (43) sur la tige d'accouplement (33) et le cas échéant une surface de butée supplémentaire (44 - 46) coopèrent ensemble pour maintenir le porte-outil (32) radialement en position coaxiale et axialement sur la broche (31), **caractérisé en ce que** le maintien de la tige d'accouplement (33) dans l'ouverture de réception (30) n'est réalisé qu'en des points d'appui discrets qui sont distants les uns des autres en direction circonférentielle, un premier et un deuxième des points d'appui discrets étant formés par les surfaces de centrage interne et externe (40, 41, 43) et constituant ensemble un appui fixe dans une première direction radiale, et un troisième des points d'appui discrets étant formé par un premier élément d'appui (39) pouvant être réglé radialement et formant un appui dans une deuxième direction radiale opposée à la première direction radiale.

2. Dispositif de serrage selon la revendication 1, **caractérisé en ce que** les points d'appui discrets sont situés dans au moins un plan de contact sécant à l'axe de rotation (3).

3. Dispositif de serrage selon la revendication 1, **caractérisé en ce que** le maintien de la tige d'accouplement dans l'ouverture de réception n'est réalisé qu'en des points d'appui discrets dans un premier plan de contact sécant à l'axe de rotation et dans un deuxième plan de contact sécant à l'axe de rotation, les surfaces de centrage interne et externe formant quatre points d'appui discrets fixes qui sont disposés par paires dans le premier et le deuxième plan de contact et qui constituent ensemble un appui fixe dans une direction radiale, et **en ce que** dans le premier et le deuxième plan de contact un troisième point d'appui discret est formé par un élément d'appui réglable radialement formant un appui dans une direction radiale opposée à la direction de l'appui fixe.

4. Dispositif de serrage pour serrer de façon coaxiale un porte-outil (4) sur une broche (2) d'une machine d'équilibrage, laquelle broche peut pivoter autour d'un axe de rotation (3), la broche (2) présentant à une extrémité frontale une ouverture de réception coaxiale (7) et le porte-outil (4) présentant une tige d'accouplement (8 ; 19) pouvant être insérée axialement dans l'extrémité frontale de la broche (2) et pouvant être serrée axialement dans l'ouverture de réception (7) à l'aide de moyens de serrage réversibles (9, 10), au moins une surface de centrage interne (17) dans l'ouverture de réception (7) et au moins une surface de centrage externe (16; 20) sur la tige d'accouplement (8; 19) coopérant ensemble pour maintenir la tige d'accouplement (8 ; 19) radialement en position centrée et le cas échéant axialement sur la broche (2), **caractérisé en ce que** le maintien de la tige d'accouplement (8 ; 19) dans l'ouverture de réception (7) n'est réalisé qu'en des points d'appui discrets (11 - 15; 21 - 25) qui sont distants les uns des autres en direction circonférentielle, sont situés dans trois plans de contact (E1, E2, E3) sécants à l'axe de rotation (3) et distants les uns des autres et sont formés par des surfaces de centrage interne et externe, un premier (11 ; 21) et un deuxième (12 ; 22) des points d'appui discrets (11 - 15 ; 21 - 25) étant formés dans un premier plan de contact (E1) en constituant ensemble un appui fixe dans une première direction radiale, un troisième (13 ; 23) et un quatrième (14 ; 24) des points d'appui discrets (11 - 15 ; 21 - 25) étant formés dans un deuxième plan de contact (E2) en constituant ensemble un deuxième appui fixe dans la première direction radiale, et dans le troisième plan de contact (E3) situé entre le premier et le deuxième plans de contact étant formé un cinquième point d'appui discret (15 ; 25) qui agit comme un appui dans une deuxième direction radiale opposée à la première direction radiale.

5. Dispositif de serrage selon la revendication 4, **caractérisé en ce que** le cinquième point d'appui discret (25) est formé par un élément d'appui pouvant être réglé radialement.

6. Dispositif de serrage selon l'une des revendications 1 à 3 ou 5, **caractérisé en ce que** l'élément d'appui pouvant être réglé radialement (39) est logé mobile radialement dans la broche (32) ou le porte-outil et peut être réglé contre la force d'un ressort (26 ; 48).

7. Dispositif de serrage selon l'une des revendications 1 à 6, **caractérisé en ce que** la surface de centrage externe (20) de la tige d'accouplement (19) est formée par une enveloppe cylindrique ou plusieurs enveloppes cylindriques.

8. Dispositif de serrage selon l'une des revendications 1 à 6, **caractérisé en ce que** la tige d'accouplement (8) présente une surface de centrage externe conique.

9. Dispositif de serrage selon l'une des revendications 1 à 6, **caractérisé en ce que** les surfaces de centrage externes de la tige d'accouplement sont des segments d'une enveloppe commune de forme tronconique.

10. Dispositif de serrage selon l'une des revendications 8 ou 9 en relation avec la revendication 4, **caractérisé en ce que** le cinquième point d'appui discret (15) est fixe.

11. Dispositif de serrage selon l'une des revendications 1 à 9, **caractérisé en ce que** la broche (31) présente une surface de butée (28) ou plusieurs surfaces de butée discrètes (44 - 46) pour l'appui axial du porte-outil (32).

12. Dispositif de serrage selon l'une des revendications 1 à 11, **caractérisé en ce que** les points d'appui discrets (11, 12 ou 13, 14 ; 21, 22 ou 23, 24) qui sont dans le même plan de contact (E1 ou E2) ont la même distance radiale par rapport à l'axe de rotation (3).

13. Dispositif de serrage selon la revendication 12, **caractérisé en ce que** les points d'appui discrets (11, 13, ou 12, 14) de différents plans de contact (E1, E2) ont une distance radiale par rapport à l'axe de rotation (3) de taille différente.

14. Dispositif de serrage selon l'une des revendications 1 à 13, **caractérisé en ce que** les surfaces de centrage internes des points d'appui discrets (11 à 15 ; 21 à 25) sont concaves ou cintrées de façon convexe ou planes.
